# EUROPEAN PATENT APPLICATION

(11) **EP 4 451 008 A1**
(43) Date of publication of application: **23.10.2024**
(21) Application number: 22907408.3
(22) Date of filing: 12.12.2022
(51) Int. Cl.: G01S 7/497, G01C 3/06, G01S 7/4865

(54) **RANGING DEVICE, DETERMINING DEVICE, DETERMINING METHOD, AND PROGRAM**

(30) Priority: 17.12.2021 JP 2021205251
(71) Applicant: Pioneer Corporation, Tokyo 113-0021 (JP); Pioneer Smart Sensing Innovations Corporation, Tokyo 113-0021 (JP)
(72) Inventor: HOSOI Kenichiro, Kawagoe-shi, Saitama 350-8555 (JP); MIYANABE Shogo, Kawagoe-shi, Saitama 350-8555 (JP); HASEBE Tsuyoshi, Kawagoe-shi, Saitama 350-8555 (JP)
(74) Representative: Vossius & Partner Patentanwälte Rechtsanwälte mbB
(86) International application number: PCT/JP2022/045634
(87) International publication number: WO 2023/112884

(57) **Abstract**

A distance measurement apparatus (10) is a distance measurement apparatus (10) that emits pulsed-light emitted from a light source (14) through a transmissive member (20) and causes a light receiving unit (180) to detect the pulsed-light reflected by a target object (30). The distance measurement apparatus (10) includes a determination unit (121). The determination unit (121) performs at least one of a determination on whether or not an attached-matter exists at the transmissive member (20) and a determination on whether or not the target object (30) is at a short distance from the distance measurement apparatus (10), by using a saturation waveform. Here, the saturation waveform is a reception pulsed-light waveform which is generated by the light receiving unit (180) and in which a reception light signal is partially saturated.

## Description

### TECHNICAL FIELD

The present invention relates to a distance measurement apparatus, a determination apparatus, a determination method, and a program.

### BACKGROUND ART

In an apparatus that receives reflection light from a target object and performs measurement, when an intensity of the reflection light is too strong, a reception light signal is saturated, which leads to deterioration of measurement accuracy.

Patent Document 1 describes detecting a rising edge of the saturated reception signal.

### RELATED DOCUMENT

### PATENT DOCUMENT

Patent Document 1: PCT Japanese Translation Patent Publication No. 2021-518551

### SUMMARY OF THE INVENTION

### TECHNICAL PROBLEM

On the other hand, in a case where the reception light signal is saturated, it is important to determine a cause of the saturation in order to improve the measurement accuracy. In Patent Document 1, it is not possible to determine the cause of the signal saturation.

An example of a problem to be solved by the present invention is to obtain, in a case where a reception light signal is saturated in a measurement apparatus that receives reflection light from a target object, information on a cause of the saturation.

### SOLUTION TO PROBLEM

According to the invention described in claim 1, there is provided a distance measurement apparatus that emits pulsed-light emitted from a light source through a transmissive member and causes a light receiving unit to detect the pulsed-light reflected by a target object, the distance measurement apparatus including: a determination unit that performs at least one of a determination on whether or not an attached-matter exists at the transmissive member and a determination on whether or not the target object is at a short distance from the distance measurement apparatus, by using a saturation waveform that is a reception pulsed-light waveform which is generated by the light receiving unit and in which a reception light signal is partially saturated.

According to the invention described in claim 8, there is provided a determination apparatus including: a determination unit that performs, by using a saturation waveform that is a reception pulsed-light waveform which is generated by a light receiving unit of a distance measurement apparatus that emits pulsed-light emitted from a light source through a transmissive member and causes the light receiving unit to detect the pulsed-light reflected by a target object and in which a reception light signal is partially saturated, at least one of a determination on whether or not an attached-matter exists at the transmissive member and a determination on whether or not the target object is at a short distance from the distance measurement apparatus.

According to the invention described in claim 9, there is provided a determination method executed by a computer, the method including: performing, by using a saturation waveform that is a reception pulsed-light waveform which is generated by a light receiving unit of a distance measurement apparatus that emits pulsed-light emitted from a light source through a transmissive member and causes the light receiving unit to detect the pulsed-light reflected by a target object and in which a reception light signal is partially saturated, at least one of a determination on whether or not an attached-matter exists at the transmissive member and a determination on whether or not the target object is at a short distance from the distance measurement apparatus.

According to the invention described in claim 10, there is provided a program causing a computer to function as: the determination apparatus according to claim 8.

### BRIEF DESCRIPTION OF THE DRAWINGS

Fig. 1 is a diagram illustrating a configuration of a distance measurement apparatus according to a first embodiment.
Fig. 2 is a diagram illustrating in detail the configuration of the distance measurement apparatus according to the first embodiment.
Fig. 3 is a diagram illustrating a hardware configuration of the distance measurement apparatus according to the first embodiment.
Fig. 4 is a diagram illustrating a waveform of a reception light signal of a light receiving unit in a case where the light receiving unit is not saturated.
Fig. 5 is a diagram illustrating an example of a reception light signal in a case where an internal reflection peak is saturated.
Fig. 6 is a diagram illustrating an example of a reception light signal in a case where a target object exists at a short distance from the distance measurement apparatus.
Fig. 7 is a diagram illustrating a waveform in a case where an internal reflection peak is saturated due to an attached-matter to a transmissive member.
Fig. 8 is a diagram illustrating a waveform in a case where an object peak is saturated due to the presence of the target object at the short distance from the distance measurement apparatus.
Fig. 9 is a flowchart illustrating a flow of a determination method according to the first embodiment.
Fig. 10 is a flowchart illustrating in detail a flow of a process performed by a determination unit according to the first embodiment.
Fig. 11 is a diagram describing the process performed by the determination unit according to the first embodiment.
Fig. 12 is a diagram describing the process performed by the determination unit according to the first embodiment.
Fig. 13 is a flowchart illustrating a flow of a process performed by a determination unit according to a second embodiment.
Fig. 14 is a diagram describing a determination process performed by a determination unit according to the second embodiment.
Fig. 15 is a diagram describing the determination process performed by the determination unit according to the second embodiment.
Fig. 16 is a block diagram illustrating a configuration of a determination apparatus according to a third embodiment.
Fig. 17 is a diagram illustrating a hardware configuration of the determination apparatus according to the third embodiment.
Fig. 18 is a diagram schematically illustrating a configuration example of a distance measurement apparatus to which a telescope tube portion is attached.

### DESCRIPTION OF EMBODIMENTS

Hereinafter, embodiments according to the present invention will be described by using the drawings. In all of the drawings, the same components are denoted by the same reference numerals, and description thereof is not repeated as appropriate.

### (First Embodiment)

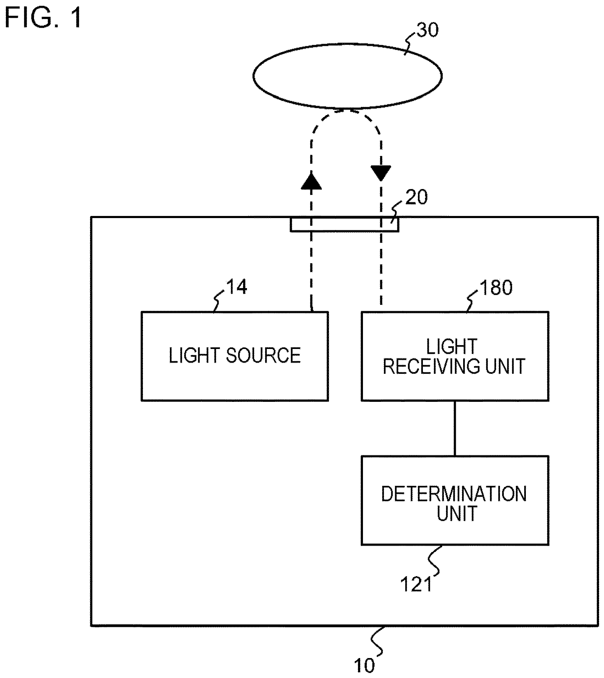

Fig. 1 is a diagram illustrating a configuration of a distance measurement apparatus 10 according to a first embodiment. In this diagram, a light path is schematically illustrated by a broken line arrow. The distance measurement apparatus 10 according to the present embodiment is the distance measurement apparatus 10 that emits pulsed-light emitted from a light source 14 through a transmissive member 20, and causes a light receiving unit 180 to detect the pulsed-light reflected by a target object 30. The distance measurement apparatus 10 includes a determination unit 121. The determination unit 121 uses a saturation waveform to perform at least one of a determination on whether or not an attached-matter exists at the transmissive member 20 and a determination on whether or not the target object 30 is at a short distance from the distance measurement apparatus 10. Here, the saturation waveform is a reception pulsed-light waveform which is generated by the light receiving unit 180 and in which a reception light signal is partially saturated. Details will be described below.

In the example of this diagram, the distance measurement apparatus 10 includes the light source 14, the transmissive member 20, and the light receiving unit 180.

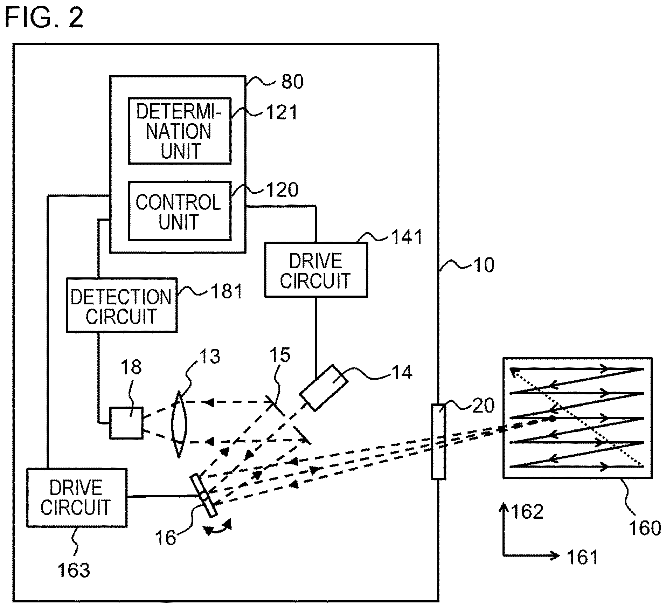

Fig. 2 is a diagram illustrating in detail the configuration of the distance measurement apparatus 10 according to the present embodiment. In this diagram, a broken line arrow schematically indicates a path of light. The configuration of the distance measurement apparatus 10 will be described in detail with reference to this diagram.

The distance measurement apparatus 10 is an apparatus that measures a distance from the distance measurement apparatus 10 to an object (target object 30) located within a scanning range 160 based on, for example, a difference between an emission timing of pulsed-light and a light reception timing of reflection light (reflected pulsed-light). The target object 30 is not particularly limited, and may be, for example, a living object, a non-living object, a moving object, a stationary object, or the like. The pulsed-light is light such as infrared light, for example. In addition, the pulsed-light is, for example, a laser pulse. The pulsed-light that is output from the light source 14 provided in the distance measurement apparatus 10 and is emitted to the outside of the distance measurement apparatus 10 through the transmissive member 20 is reflected by the object, and at least a part thereof returns toward the distance measurement apparatus 10. The reflection light passes through the transmissive member 20 again, and is incident into the distance measurement apparatus 10. The reflection light incident into the distance measurement apparatus 10 is received by the light receiving unit 180 and an intensity thereof is detected. Here, the distance measurement apparatus 10 measures a time from when pulsed-light is emitted from the light source 14 to when reflection light is detected by the light receiving unit 180. A control unit 120 provided in the distance measurement apparatus 10 calculates a distance between the distance measurement apparatus 10 and the object by using the measured time and a propagation speed of the pulsed-light. The distance measurement apparatus 10 is, for example, a laser imaging detection and ranging or laser illuminated detection and ranging (LIDAR) device or a light detection and ranging (LiDAR) device.

The light source 14 emits pulsed-light. The light source 14 is, for example, a laser diode. The light receiving unit 180 includes a light receiving element 18 and a detection circuit 181. The light receiving element 18 receives the pulsed-light incident onto the distance measurement apparatus 10 and internal reflection light to be described below. The light receiving element 18 is a photodiode such as an avalanche photodiode (APD), for example.

In the example of this diagram, the distance measurement apparatus 10 further includes a movable mirror 16. The movable mirror 16 is, for example, a uniaxially movable or biaxially movable MEMS mirror. By changing a direction of a reflecting surface of the movable mirror 16, an emission direction of pulsed-light emitted from the distance measurement apparatus 10 can be changed. In a case where the movable mirror 16 is a biaxially movable MEMS mirror, a raster scan can be performed within a predetermined range with the pulsed-light by biaxially driving the movable mirror 16.

The control unit 120 generates point cloud data including measurement results using a plurality of pulsed-light beams. For example, in a case where a raster scan is performed within the scanning range 160, the linear scan is performed by changing the emission direction of light to a first direction 161. The point cloud data including a plurality of measurement results within the scanning range 160 can be generated by performing a plurality of linear scans while changing the emission direction of light to a second direction 162. In the example of this diagram, the first direction 161 and the second direction 162 are orthogonal to each other.

A unit of the point cloud data generated by one raster scan is called a frame. After the measurement for one frame is completed, the emission direction of light returns to an initial position, and the measurement for the next frame is performed. In this manner, frames are repeatedly generated. In the point cloud data, a distance measured by using pulsed-light is associated with information indicating the emission direction of the pulsed-light. Alternatively, the point cloud data may include three-dimensional coordinates indicating a reflection point of the pulsed-light. The control unit 120 generates the point cloud data by using the calculated distance and information indicating an angle of the movable mirror 16 when emitting each pulsed-light. The generated point cloud data may be output to the outside of the distance measurement apparatus 10, or may be held in a storage device accessible by the control unit 120.

In the example of this diagram, the distance measurement apparatus 10 further includes a perforated mirror 15 and a condenser lens 13. The pulsed-light output from the light source 14 passes through a hole of the perforated mirror 15, is reflected by the movable mirror 16, and then is emitted from the distance measurement apparatus 10. In addition, reflection light incident onto the distance measurement apparatus 10 is reflected by the movable mirror 16 and the perforated mirror 15, and then is incident onto the light receiving unit 180 through the condenser lens 13. The distance measurement apparatus 10 may further include a collimating lens, a mirror, and the like.

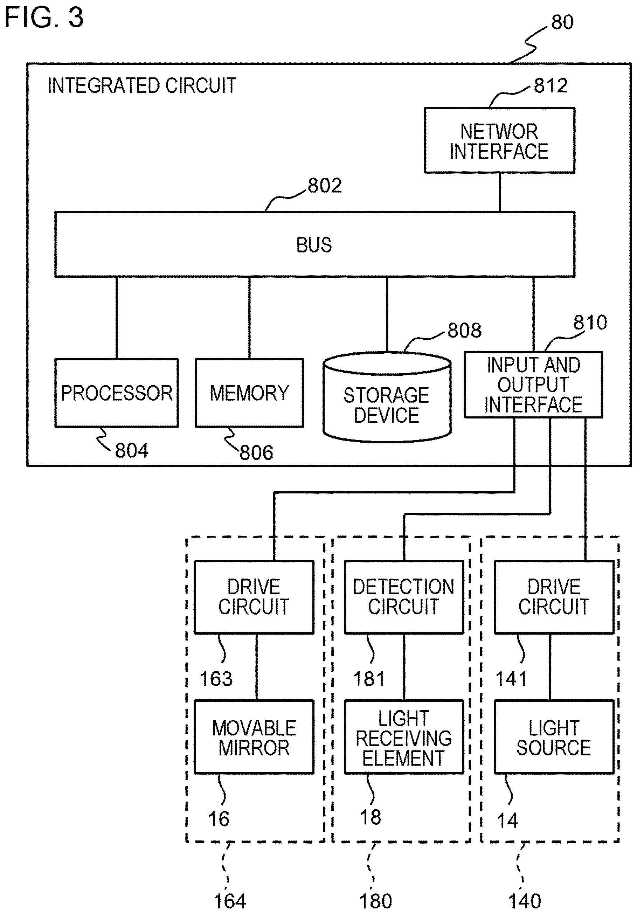

The control unit 120 can control a light emitting unit 140, the light receiving unit 180, and a movable reflection unit 164 (see Fig. 3). The light emitting unit 140, the light receiving unit 180, and the movable reflection unit 164 are included in the distance measurement apparatus 10. The light emitting unit 140 includes the light source 14 and a drive circuit 141. The light receiving unit 180 includes a light receiving element 18 and a detection circuit 181. The movable reflection unit 164 includes the movable mirror 16 and a drive circuit 163. The drive circuit 141 is a circuit for causing the light source 14 to emit light based on a control signal from the control unit 120 and includes, for example, a switching circuit or a capacitance element. The detection circuit 181 includes an I-V converter or an amplifier and outputs a signal indicating a detected intensity of light by the light receiving element 18. The control unit 120 acquires a reception light signal from the light receiving unit 180, and performs a process of detecting a peak for the reception light signal to detect a peak derived from reflection light from the target object 30. A distance from the distance measurement apparatus 10 to the target object 30 in the scanning range 160 is calculated as described above by using a light reception timing of the detected peak and an emission timing of light. The distance measurement apparatus 10 includes the determination unit 121, and performs, in a case where the reception light signal at the light receiving unit 180 is saturated, a determination on a cause of the saturation.

Fig. 3 is a diagram illustrating a hardware configuration of the distance measurement apparatus 10 according to the present embodiment. The control unit 120 and the determination unit 121 are implemented by using an integrated circuit 80. The integrated circuit 80 is, for example, a system on chip (SoC).

The integrated circuit 80 includes a bus 802, a processor 804, a memory 806, a storage device 808, an input and output interface 810, and a network interface 812. The bus 802 is a data transmission path for the processor 804, the memory 806, the storage device 808, the input and output interface 810, and the network interface 812 to transmit and receive data to and from each other. Meanwhile, a method of mutually connecting the processor 804 and the like is not limited to bus connection. The processor 804 is an arithmetic processing device implemented by using a microprocessor or the like. The memory 806 is a memory implemented by using a random access memory (RAM) or the like. The storage device 808 is a storage device implemented by using a read only memory (ROM), a flash memory, or the like.

The input and output interface 810 is an interface for connecting the integrated circuit 80 to peripheral devices. In this diagram, the drive circuit 141 of the light source 14, the detection circuit 181 of the light receiving element 18, and the drive circuit 163 of the movable mirror 16 are connected to the input and output interface 810.

The network interface 812 is an interface for connecting the integrated circuit 80 to a communication network. This communication network is a communication network such as a controller area network (CAN), Ethernet, and low voltage differential signaling (LVDS), for example. A method of connecting the network interface 812 to the communication network may be a wireless connection or a wired connection.

The storage device 808 stores a program module for implementing the functions of the control unit 120 and the determination unit 121. The processor 804 implements the functions of the control unit 120 and the determination unit 121 by reading the program module into the memory 806 and executing the program module.

A hardware configuration of the integrated circuit 80 is not limited to the configuration illustrated in this diagram. For example, the program module may be stored in the memory 806. In this case, the integrated circuit 80 may not include the storage device 808.

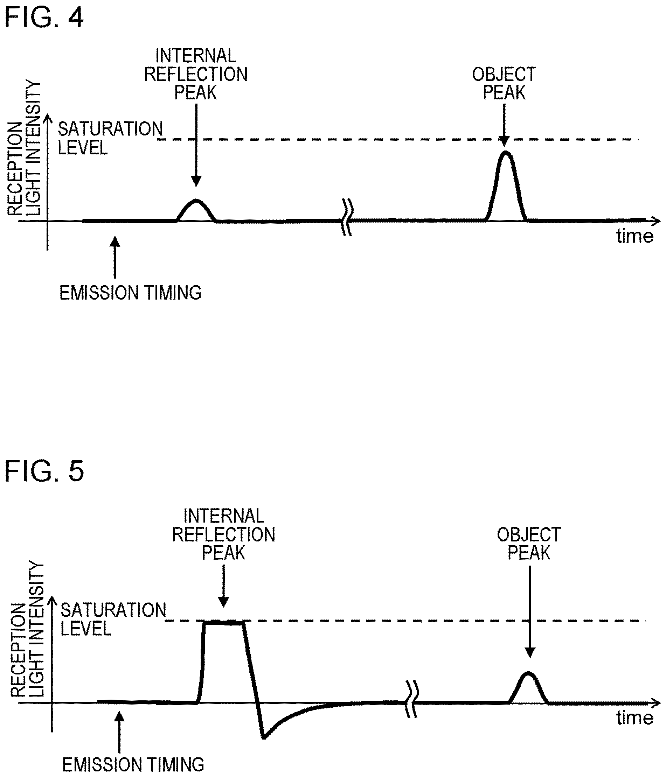

Figs. 4 to 6 are diagrams illustrating examples of a reception light signal generated by the light receiving unit 180. The reception light signal is a signal output from the detection circuit 181 and input to the control unit 120. In the examples of Figs. 4 to 6, as a reception light intensity by the light receiving element 18 is increased, the larger reception light signal is output in a positive direction. A polarity and the like of the reception light signal with respect to the reception light intensity are not limited to the example of this diagram. For example, the light receiving unit 180 may have a configuration in which, as the reception light intensity of the light receiving element 18 is increased, the larger reception light signal is output in a negative direction. In the following description, the polarity and the like in a process are also set as appropriate. In examples in Figs. 4 to 6, a saturation level of the light receiving unit 180 is indicated by a broken line. The saturation level of the light receiving unit 180 is the maximum signal level that can be output from the light receiving unit 180, and an intensity of light exceeding this level is not correctly reflected in the reception light signal. With reference to Figs. 4 to 6, a reception light peak by internal reflection light and reflection light from the target object 30 will be described below.

The distance measurement apparatus 10 emits light output from the light source 14 to an outside of the distance measurement apparatus 10 mainly through the transmissive member 20 as illustrated in Fig. 1. Meanwhile, at least a part of the light output from the light source 14 is reflected inside the distance measurement apparatus 10, and becomes internal reflection light. The internal reflection light is received by the light receiving unit 180. This internal reflection light also includes the light reflected by the transmissive member 20. In addition, in a case where attached-matter exists at the transmissive member 20, reflection light caused by the attached-matter is included in the internal reflection light.

The transmissive member 20 is a light transmissive member that partitions an inside and the outside of the distance measurement apparatus 10. The transmissive member 20 is made of, for example, glass or resin. At least one surface of the transmissive member 20 is exposed to an external space of the distance measurement apparatus 10, and stains, raindrops, and the like may adhere to the surface. The reflection light caused by the attached-matter includes, for example, light reflected at an interface between the transmissive member 20 and the attached-matter, light reflected inside the attached-matter, and light reflected at an interface between the attached-matter and air. The light receiving unit 180 receives the internal reflection light and the reflection light from the target object 30. The target object 30 is not an attached-matter to the transmissive member 20, that is, an object not in contact with the transmissive member 20.

Fig. 4 is a diagram illustrating a waveform of a reception light signal of the light receiving unit 180 in a case where the light receiving unit 180 is not saturated. The internal reflection light described above is received by the light receiving unit 180 immediately after light emission from the light source 14. On the other hand, reflection light from the target object 30 is received by the light receiving unit 180 at a timing corresponding to a distance from the distance measurement apparatus 10 to the target object 30. In a case where the target object 30 is sufficiently far from the distance measurement apparatus 10, in the reception light signal output from the light receiving unit 180, a peak obtained by receiving the internal reflection light (hereinafter, also referred to as "internal reflection peak") and a peak obtained by receiving the reflection light from the target object 30 (hereinafter, also referred to as "object peak") appear in a state of being separated from each other. That is, in this case, it can be said that a first peak in the reception light signal after emission of light is the internal reflection peak, and second and subsequent peaks are object peaks. Meanwhile, as the target object 30 becomes closer to the distance measurement apparatus 10, these peaks become closer to each other.

Fig. 5 is an example in a case where an internal reflection peak is saturated. In a case where there is an attached-matter at the transmissive member 20, a peak intensity by the reception of the internal reflection light exceeds a detection range of the light receiving unit 180, and a reception light signal of the light receiving unit 180 may be saturated as illustrated in this diagram. In the example of this diagram, if the internal reflection light is received, the reception light signal rises and is saturated. If the saturation state is escaped, the signal level returns to a zero level (reference level), and a signal value having a negative polarity is further output from the detection circuit 181. The reception light signal is a signal reflecting circuit characteristics of the light receiving element 18 and the detection circuit 181, and a negative reception light signal may be output by the circuit characteristics illustrated in this diagram. The reception light signal becomes the local minimum value, and then gradually returns to the zero level.

In the example of this diagram, the target object 30 is sufficiently far from the distance measurement apparatus 10, and the saturated internal reflection peak and an object peak appear to be separated from each other.

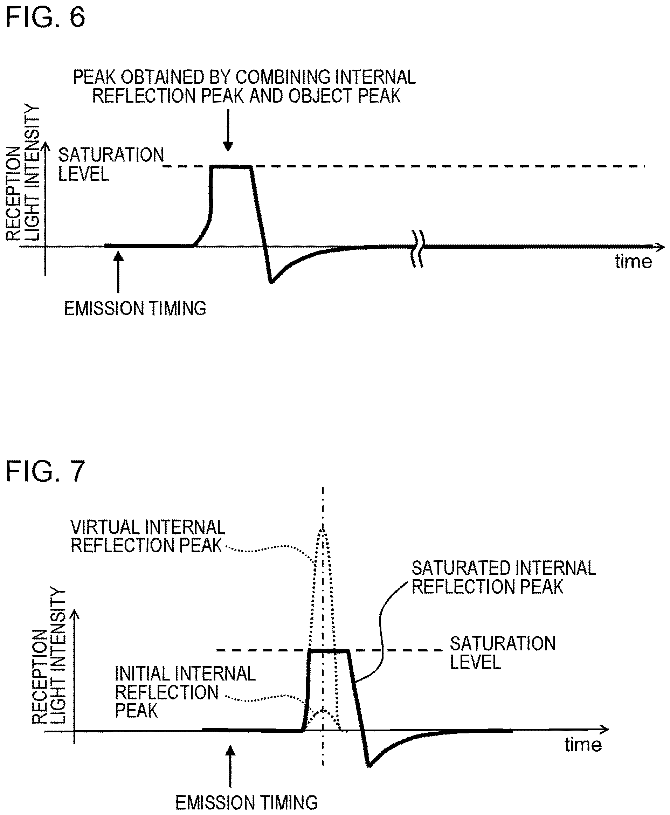

Fig. 6 is a diagram illustrating a reception light signal in a case where the target object 30 exists at a short distance from the distance measurement apparatus 10. In a case where the target object 30 exists at a short distance from the distance measurement apparatus 10, the reflection light has a high intensity, and the light receiving unit 180 is saturated. In addition, the distance measurement apparatus 10 and the target object 30 are close to each other, and thus the reflection light from the target object 30 is received immediately after the light is emitted from the distance measurement apparatus 10. As a result, a saturation peak, in which the saturated object peak and the internal reflection light peak are added to one peak, appears in the reception light signal.

In a case where a peak by pulsed-light reception for the first time by the light receiving unit is saturated after the emission of the pulsed-light, the peak has a case where the internal reflection peak is saturated due to an attached-matter to the transmissive member 20 as illustrated in Fig. 5, and a case where the object peak is saturated due to the presence of the target object 30 at a short distance, as illustrated in Fig. 6. In a case where the cause is the attached-matter, it is necessary to remove the attached-matter, and in a case where there is the target object 30 at a short distance, it is necessary to separate the target object 30 from the distance measurement apparatus 10. Alternatively, for example, in a case where the distance measurement apparatus 10 is attached to a moving object such as a vehicle, it is necessary to recognize that the target object 30 is at a short distance and to perform a necessary operation, such as collision avoidance. In this manner, since a handling method differs depending on the cause, it is necessary to determine the cause of the saturation. The determination unit 121 uses a saturation waveform to perform at least one of a determination on whether or not an attached-matter exists at the transmissive member 20 and a determination on whether or not the target object 30 is at a short distance from the distance measurement apparatus 10.

In Figs. 4 to 6, a case where there is one object peak is illustrated, and there is a case where a plurality of object peaks are detected for one emission pulse. This is because the pulsed-light may be reflected by a plurality of target objects 30 having different distances. In this case, also in the example of Fig. 6, one or more object peaks are further detected after the saturation peak. In addition, there is a case where the light receiving unit 180 does not receive the reflection light from the target object 30, such as a case where the emission light is greatly blocked by an attached-matter to the transmissive member 20 or a case where the target object 30 does not exist within a measurable distance. In this case, the object peak is not detected in the example of Fig. 5. That is, it is not possible to determine the cause of the saturation, simply based on whether or not the object peak is further detected after the saturated first peak. The first peak means the first reception light peak after the emission of the pulsed-light.

Hereinafter, internal reflection light of the distance measurement apparatus 10 in a state in which there is no attached-matter at the transmissive member 20 and there is no target object 30 within a short distance from the distance measurement apparatus 10 is particularly referred to as initial internal reflection light. In addition, a reception light peak of the internal reflection light of the distance measurement apparatus 10 in a state in which there is no attached-matter at the transmissive member 20 and there is no target object 30 within a short distance from the distance measurement apparatus 10 (for example, internal reflection peak in the state illustrated in Fig. 4) is particularly referred to as an initial internal reflection peak. A position of the initial internal reflection peak (an elapsed time from an emission timing of pulsed-light) can be measured in advance and can be recognized, for example, in a state in which there is no attached-matter to the transmissive member 20 and there is no target object 30 within a short distance from the distance measurement apparatus 10.

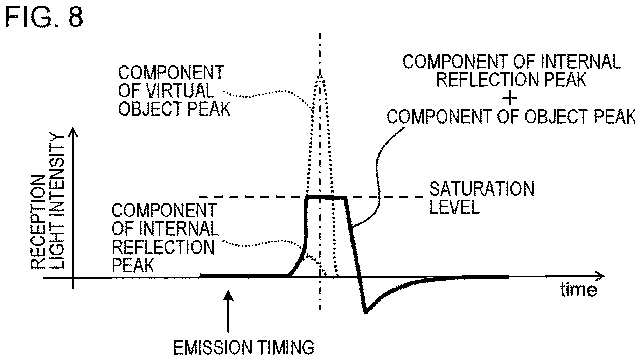

Fig. 7 is a diagram illustrating a waveform in a case where an internal reflection peak is saturated by an attached-matter to the transmissive member 20, and Fig. 8 is a diagram illustrating a waveform in a case where an object peak is saturated by the target object 30 being at a short distance from the distance measurement apparatus 10. The saturation waveforms in Figs. 7 and 8 correspond to the first peaks in Figs. 5 and 6, respectively. Each saturation waveform will be described with reference to Figs. 7 and 8.

In Fig. 7, an initial internal reflection peak and a virtual internal reflection peak increased due to an attached-matter to the transmissive member 20 are indicated by broken lines superimposed on a reception light waveform. The virtual internal reflection peak is a waveform assumed in a case where it is assumed that the light receiving unit 180 is not saturated. In a case where an attached-matter occurs at the transmissive member 20, an intensity of internal reflection light is increased. When a component of the initial internal reflection peak and a component of the virtual internal reflection peak are compared, peak positions are substantially the same, and only the peak intensity is changed. The peak intensity of the virtual internal reflection peak is increased above a saturation level of the light receiving unit 180. In an actual reception light signal, a saturation waveform is output.

In Fig. 8, a component of an internal reflection peak and a component of a virtual object peak by reflection light from the target object 30 at a short distance from the distance measurement apparatus 10 are indicated by broken lines. The component of the virtual object peak is a waveform of an object peak assumed in a case where it is assumed that the light receiving unit 180 is not saturated. In a case where there is no attached-matter at the transmissive member 20, the component of the internal reflection peak can be regarded as the same as the component of the initial internal reflection peak. When the component of the internal reflection peak and the component of the virtual object peak are compared, a peak position is shifted. Specifically, the peak position of the component of the internal reflection peak is before the peak position of the component of the virtual object peak (that is, close to an emission timing of pulsed-light). This is because the target object 30 is not in contact with the transmissive member 20, and the reflection light from the target object 30 takes slightly more time to be received than internal reflection light. A peak intensity of the component of the virtual object peak is larger than a peak intensity of the component of the internal reflection peak, which causes saturation of the light receiving unit 180. In an actual reception light signal, a saturation waveform as a result of adding up the component of the internal reflection peak and the component of the object peak is output.

Here, after the saturation, tailing occurs due to an influence of discharge of a charge accumulated in the light receiving unit 180. Therefore, a peak width of the reception light signal is increased by the occurrence of the saturation. On the other hand, it is considered that a signal up to a saturation state, that is, a rising portion of the saturation waveform correctly reflects the reception light intensity. Therefore, a position of a start point of the saturation in the saturation waveform reflects a peak position of the saturated component, that is, a peak position of the virtual internal reflection peak in Fig. 7 and a peak position of the component of the virtual object peak in Fig. 8. The determination unit 121 according to the present embodiment performs a determination on a cause of the saturation by using such a feature. The determination process performed by the determination unit 121 will be described in detail below.

The determination method according to the present embodiment is a determination method executed by a computer. In the determination method according to the present embodiment, at least one of a determination on whether or not an attached-matter exists at the transmissive member 20 and a determination on whether or not the target object 30 exists at a short distance from the distance measurement apparatus 10 is performed by using a saturation waveform that is a reception pulsed-light waveform which is generated by the light receiving unit 180 of the distance measurement apparatus 10 and in which a reception light signal is partially saturated. The distance measurement apparatus 10 is an apparatus that emits pulsed-light emitted from the light source 14 through the transmissive member 20, and causes the light receiving unit 180 to detect the pulsed-light reflected by the target object 30.

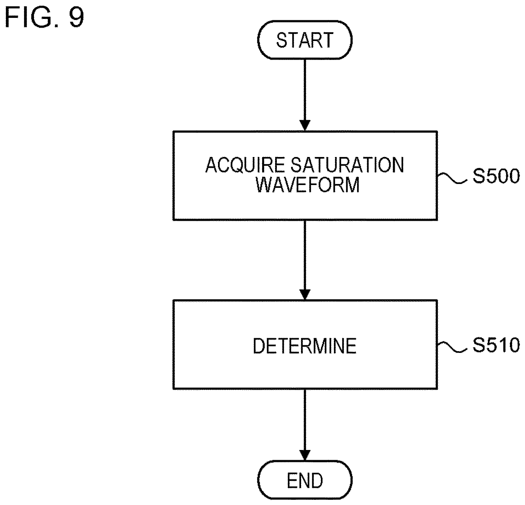

Fig. 9 is a flowchart illustrating a flow of a determination method according to the present embodiment. The determination method according to the present embodiment includes a step (S500) of acquiring a saturation waveform, and a step (S510) of performing at least one of a determination on whether or not an attached-matter exists at the transmissive member 20 and a determination on whether or not the target object 30 is at a short distance from the distance measurement apparatus 10. The present determination method is executed by the determination unit 121.

The determination unit 121 according to the present embodiment determines whether there is an attached-matter at the transmissive member 20 or the target object 30 exists at a short distance, by using a saturation waveform. Meanwhile, the determination unit 121 may only perform the determination on whether or not an attached-matter exists at the transmissive member 20, or may only perform the determination on whether or not the target object 30 exists at a short distance. The saturation waveform used by the determination unit 121 for the determination is obtained from pulsed-light reception for the first time in the light receiving unit 180 after the emission of the pulsed-light.

The determination unit 121 specifies a virtual peak position by using a plurality of data points including a start point of the saturation, in the saturation waveform. For example, the determination unit 121 specifies a peak position of a Gaussian curve or a secondary curve passing through the plurality of data points, as the virtual peak position. By comparing the virtual peak position and a predetermined reference position, at least one of a determination on whether or not there is an attached-matter to the transmissive member 20 and a determination on whether or not the target object 30 is at a short distance from the distance measurement apparatus 10 is performed. Here, the reference position is a position determined based on a reception light peak of internal reflection light of the distance measurement apparatus in a state in which there is no attached-matter to the transmissive member 20 and there is no target object 30 at a short distance from the distance measurement apparatus 10. That is, the reference position is determined based on a peak position of the initial internal reflection light peak described above. The reference position is, for example, the peak position of the initial internal reflection light peak. Alternatively, in consideration of errors and the like, the reference position can be a position (that is, a timing shifted backward) at which a predetermined value is added to the peak position of the initial internal reflection light peak. The reference position is determined as an elapsed time from a timing of emission of pulsed-light. The reference position is determined for each angle of the movable mirror 16, that is, the emission direction of the pulsed-light. This is because the internal reflection occurs differently depending on an angle of the movable mirror 16. The determination unit 121 makes a determination by using a reference position corresponding to an emission angle of the pulsed-light when a saturation waveform to be used for determination is obtained.

The determination unit 121 may specify the virtual peak position by using a plurality of data points including an end point of saturation, instead of specifying the virtual peak position by using a plurality of data points including a start point of the saturation. Meanwhile, as described above, the start point of the saturation more accurately reflects the position of the component of the saturated peak than the end point of the saturation. Therefore, it is preferable to use the plurality of data points including the start point of the saturation.

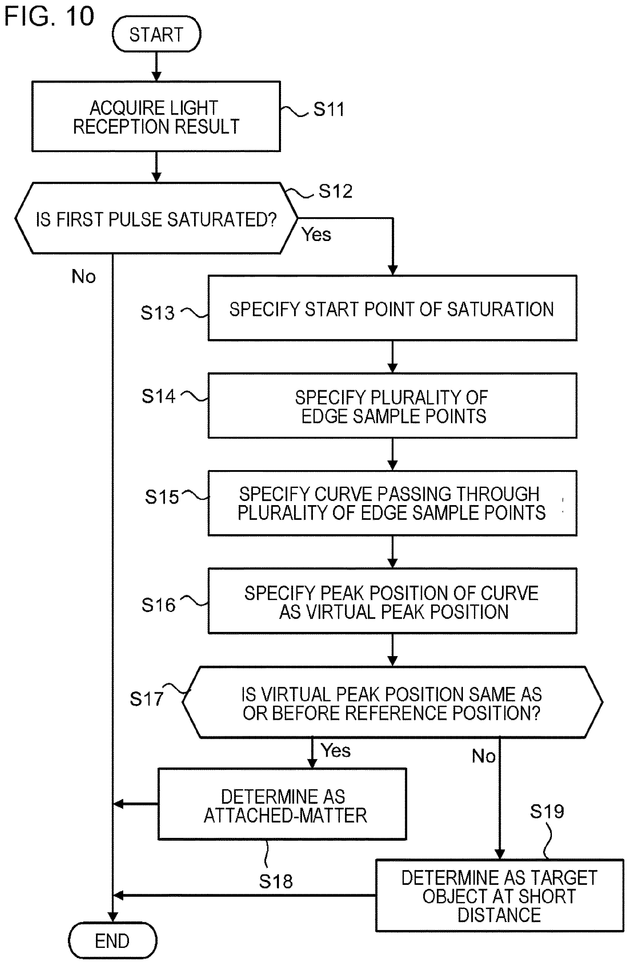

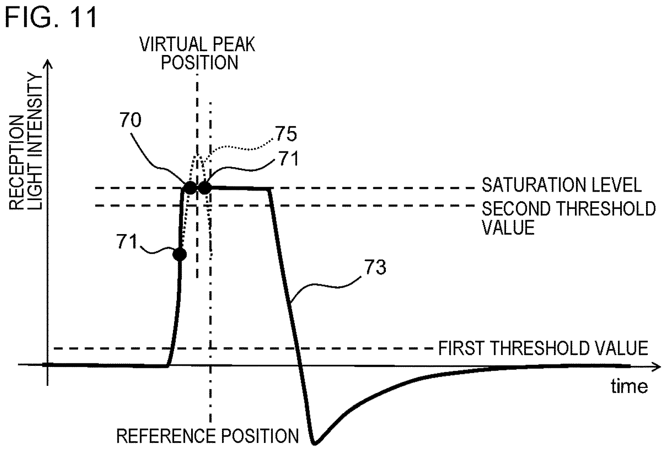

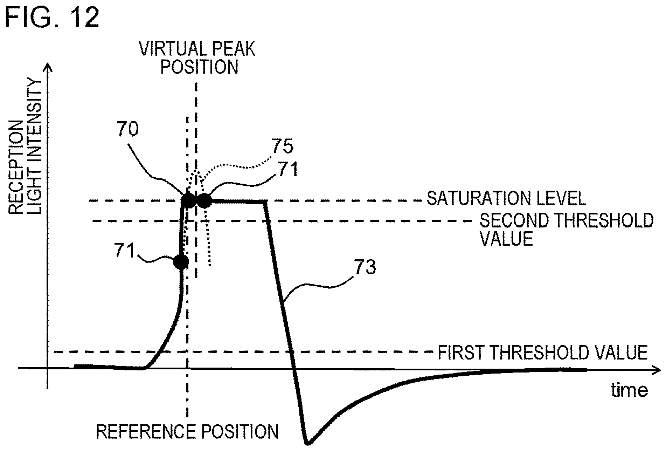

Fig. 10 is a flowchart illustrating in detail a flow of a process performed by the determination unit 121 according to the present embodiment. Figs. 11 and 12 are diagrams describing the process performed by the determination unit 121 according to the present embodiment. Figs. 11 and 12 illustrate a procedure of determination using a saturation waveform 73.

In a case where pulsed-light is emitted by the distance measurement apparatus 10, the determination unit 121 acquires a reception light signal that is a light reception result within a predetermined time from the emission (S11). The determination unit 121 may acquire the reception light signal from the light receiving unit 180 or may acquire the reception light signal from the control unit 120. The reception light signal is configured with time-series reception light values sampled at predetermined intervals. The reception light value indicates a reception light intensity in the light receiving unit 180. When acquiring the reception light signal, the determination unit 121 determines whether or not a reception light waveform by the first pulsed-light reception after emission of the pulsed-light is saturated (S12). Specifically, in a case where a reception light value exceeding a predetermined first threshold value is continued for a first reference count or more for the first time after the emission of the pulsed-light, the determination unit 121 determines that the reception light value is obtained from the pulsed-light reception for the first time. In a case where at least a part of the reception light value exceeds a predetermined second threshold value in the first pulsed-light reception, it is determined that the reception light waveform by the first pulsed-light reception is saturated (Yes in S12). On the other hand, in a case where it is not determined that the reception light waveform by the first pulsed-light reception is saturated (No in S12), the determination unit 121 ends the process for the pulsed-light emission. Here, the first threshold value is a value that slightly exceeds a noise level of the light receiving unit 180. The second threshold value is a value slightly less than a saturation level of the light receiving unit 180.

The control unit 120 may determine whether or not the reception light waveform by the first pulsed-light reception is saturated. Only in a case where it is determined that the reception light waveform by the first pulsed-light reception is saturated, the determination unit 121 may acquire information indicating the saturation waveform from the control unit 120.

In a case where it is determined that the reception light waveform by the first pulsed-light reception is saturated (Yes in S12), the determination unit 121 specifies a start point of the saturation (S13). Specifically, the determination unit 121 sets a point (reception light value) at which the reception light value exceeds the second threshold value for the first time, as a start point 70 of the saturation. Next, the determination unit 121 specifies a plurality of edge sample points including the start point 70 of the saturation (S14). In the examples of Figs. 11 and 12, a point (reception light value) 71 before and after the start point 70 and the start point 70 are combined to form the plurality of edge sample points. That is, in this example, the determination unit 121 specifies three edge sample points. Meanwhile, the determination unit 121 may specify four or more edge sample points. It is preferable that the plurality of edge sample points include a point one or more points before and a point one or more points after the start point 70 of the saturation. The plurality of edge sample points among a plurality of time-series reception light values constituting the saturation waveform do not necessarily need to be adjacent to each other. The plurality of edge sample points may be determined by thinning out some points such that a feature of a shape of the saturation waveform can be appropriately extracted.

Next, the determination unit 121 specifies a curve 75 passing through the plurality of edge sample points (S15). As described above, the determination unit 121 specifies, for example, a Gaussian curve or a secondary curve passing through the plurality of edge sample points. The curve passing through the plurality of edge sample points can be specified by using an existing fitting processing technique or the like. The determination unit 121 specifies a peak position of the specified curve 75, as a virtual peak position (S16).

The determination unit 121 determines whether or not the specified virtual peak position is the same as or before a reference position (S17). Information indicating the reference position is held in advance in a storage unit (for example, the storage device 808) that is accessible from the determination unit 121, and the determination unit 121 can read the information from the storage unit and use the information for the determination.

In a case where the virtual peak position is the same as or before the reference position (Yes in S17), the determination unit 121 determines that the transmissive member 20 has an attached-matter (S18). Alternatively, the determination unit 121 determines that there is no target object 30 at a short distance from the distance measurement apparatus 10. On the other hand, in a case where the virtual peak position is neither the same as nor before the reference position (No in S17), the determination unit 121 determines that the target object 30 is at a short distance from the distance measurement apparatus 10 (S19). Alternatively, the determination unit 121 determines that there is no attached-matter at the transmissive member 20. The process for the pulsed-light emission is ended. The case where the virtual peak position is the same as or before the reference position means that the virtual peak position is closer to the emission timing of the pulsed-light than the reference position or the virtual peak position is the same as the reference position. The determination unit 121 performs these processes for each emission of pulsed-light.

The determination unit 121 may further hold the determination result in a storage unit that is accessible from the determination unit 121, or may output the determination result as display on a display or sound from a speaker. For example, in a case where it is determined that the transmissive member 20 has an attached-matter, the determination unit 121 may output information for prompting cleaning of the transmissive member 20 to a display or a speaker. In a case where it is determined that the target object 30 is at a short distance from the distance measurement apparatus 10, the determination unit 121 may output information for prompting removal of the target object 30 having a short distance to a display or a speaker. In a case where the distance measurement apparatus 10 is attached to a moving object such as a vehicle, the determination unit 121 may output a control signal for avoiding the target object 30 at a short distance.

### (Modification Example)

A modification example of the first embodiment will be described below. The distance measurement apparatus 10 according to the present modification example has the same manner as the distance measurement apparatus 10 described above, except that the determination unit 121 specifies a reference position to be used for determination according to a configuration of an optical system of the distance measurement apparatus 10.

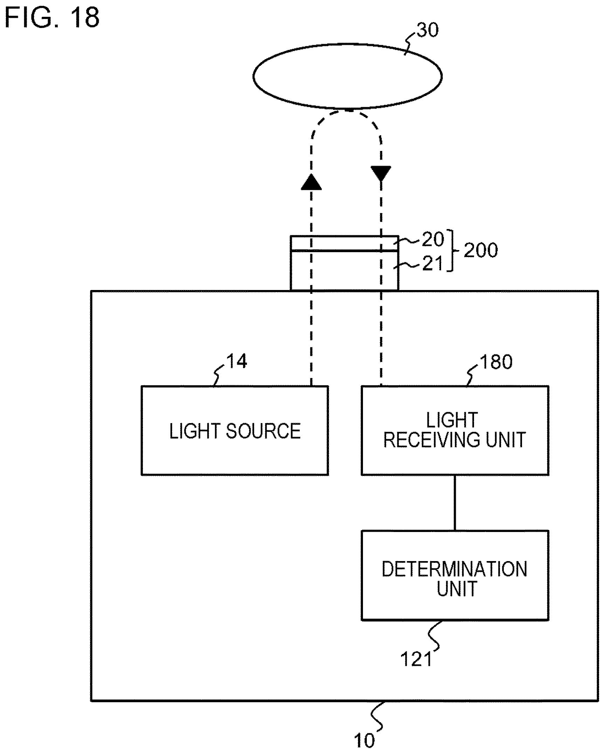

Fig. 18 is a diagram schematically illustrating a configuration example of the distance measurement apparatus 10 to which a telescope tube portion 200 is attached. The telescope tube portion 200 is detachable in the distance measurement apparatus 10. The telescope tube portion 200 includes a telephoto lens 21 and the transmissive member 20 provided on an outside thereof. In a case where the distance measurement apparatus 10 includes the telescope tube portion 200, an optical path length from emission by the light source 14, reflection by the transmissive member 20, and incident onto the light receiving unit 180 becomes longer than in a case where the distance measurement apparatus 10 does not include the telescope tube portion 200. Therefore, it is preferable to perform a determination by using different reference positions in a case where the distance measurement apparatus 10 includes the telescope tube portion 200 and in a case where the distance measurement apparatus 10 does not include the telescope tube portion 200. By doing so, it is possible to improve determination accuracy. Specifically, the reference position to be used in a case where the distance measurement apparatus 10 includes the telescope tube portion 200 is after the reference position to be used in a case where the distance measurement apparatus 10 does not include the telescope tube portion 200 (that is, a time from the emission timing is longer).

Specifically, the optical path lengths in both cases are calculated based on a structure of the telescope tube portion 200, and the difference is added to the reference position in a case where the distance measurement apparatus 10 does not include the telescope tube portion 200, so that the reference position in a case where the distance measurement apparatus 10 includes the telescope tube portion 200 can be determined. The reference position to be in a case where the distance measurement apparatus 10 does not include the telescope tube portion 200 and the reference position to be used in a case where the distance measurement apparatus 10 does not include the reference position are held in advance in a storage unit that is accessible from the determination unit 121. Further, a user or the like inputs the presence or absence of the telescope tube portion 200 to the distance measurement apparatus 10 in advance, and the determination unit 121 acquires this information. The user or the like may provide an input for updating the presence or absence of the telescope tube portion 200 in a case where the telescope tube portion 200 is attached or detached. The determination unit 121 reads a reference position to be used from the storage unit based on the presence or absence of the telescope tube portion 200, and uses the reference position for the determination in S17.

The determination unit 121 may correct the reference position based on the presence or absence of the telescope tube portion 200. In this case, for example, the difference in optical path length described above is held in advance in the storage unit, as a correction parameter. In a case of acquiring the information indicating that the telescope tube portion 200 is attached to the distance measurement apparatus 10, the determination unit 121 reads and acquires the correction parameter from the storage unit. The reference position is corrected by adding the auxiliary parameter to the reference position, and the determination in S17 is performed by using the corrected reference position.

As above, with the present embodiment, the determination unit 121 uses a saturation waveform to perform at least one of a determination on whether or not an attached-matter exists at the transmissive member 20 and a determination on whether or not the target object 30 is at a short distance from the distance measurement apparatus 10. Therefore, in a case where a reception light signal is saturated, information on a cause can be obtained.

### (Second Embodiment)

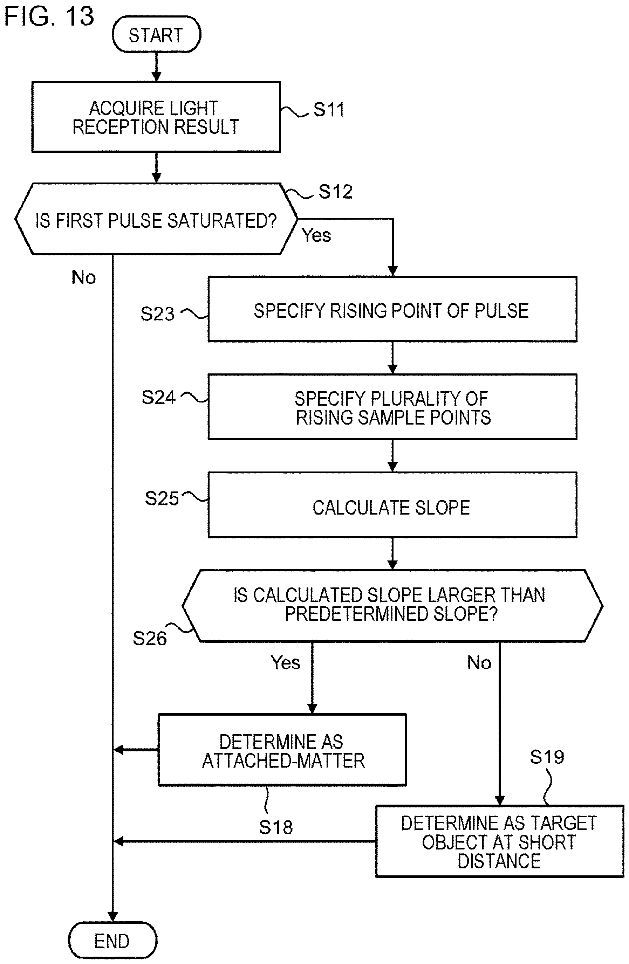

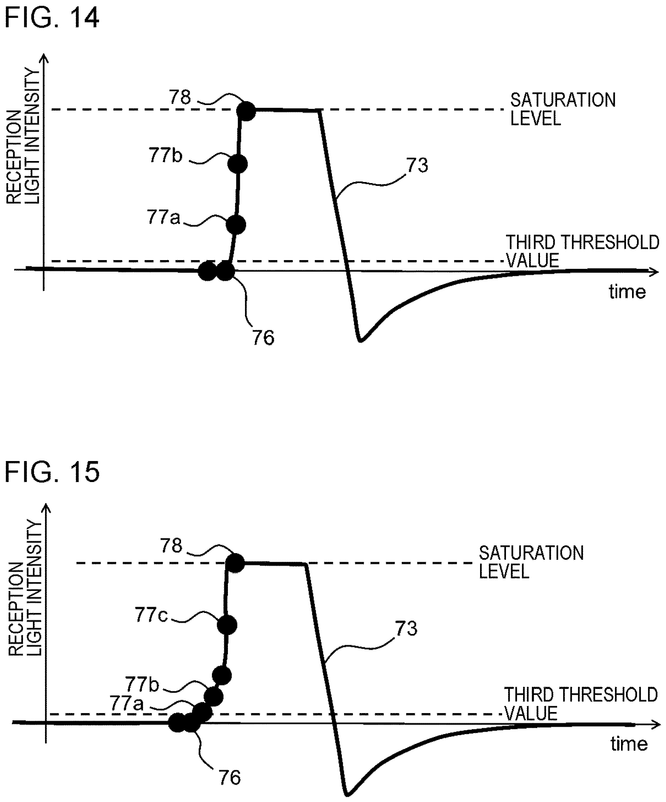

Fig. 13 is a flowchart illustrating a flow of a process performed by the determination unit 121 according to a second embodiment. Figs. 14 and 15 are diagrams describing a determination process performed by the determination unit 121 according to the present embodiment. Fig. 14 illustrates an example in a case where an attached-matter exists at the transmissive member 20, and Fig. 15 illustrates an example in a case where the target object 30 exists at a short distance from the distance measurement apparatus 10. The distance measurement apparatus 10 according to the present embodiment has the same manner as the distance measurement apparatus 10 according to the first embodiment, except that the determination unit 121 performs at least one of a determination on whether or not an attached-matter exists at the transmissive member 20 and a determination on whether or not the target object 30 exists at a short distance from the distance measurement apparatus 10 by using a slope of a rising portion of a pulse in a saturation waveform. Details will be described below.

As can be seen from a comparison of Figs. 7 and 8, the saturation waveform in a case where an attached-matter is at the transmissive member 20 and the saturation waveform in a case where the target object 30 exists at a short distance from the distance measurement apparatus 10 have the different shapes of the rising portions of the pulses. Specifically, an angle of a beginning at the rising is smaller in the saturation waveform in a case where the target object 30 is at a short distance than in the saturation waveform in a case where there is an attached-matter at the transmissive member 20. This is because the component of the internal reflection peak first starts to appear in the saturation peak in a case where the target object 30 is at a short distance. Therefore, the determination unit 121 can determine a cause of the saturation, by using the slope of the rising portion of the pulse in the saturation waveform.

If pulsed-light is emitted by the distance measurement apparatus 10, the determination unit 121 performs the processes of S11 and S12 in the same manner as in the first embodiment. Even in the present embodiment, the control unit 120 may determine whether or not a reception light waveform by first pulsed-light reception is saturated. Only in a case where it is determined that the reception light waveform by the first pulsed-light reception is saturated, the determination unit 121 may acquire information indicating the saturation waveform from the control unit 120.

In a case where it is not determined that the reception light waveform by the first pulsed-light reception is saturated (No in S12), the determination unit 121 ends the process for the pulsed-light emission. On the other hand, when it is determined that the reception light waveform by the first pulsed-light reception is saturated (Yes in S12), the determination unit 121 specifies a rising point 77a of a pulse (peak) (S23). Specifically, the determination unit 121 sets a point at which a reception light value exceeds a third threshold value for the first time, as the rising point 77a of the pulse. The third threshold value is a value slightly more than a noise level of the light receiving unit 180.

Next, the determination unit 121 specifies a plurality of rising sample points (S24). For example, the plurality of rising sample points may or may not include a point 76 at a base of the rising. The point 76 at the base of the rising is one point before the point 77a at which the third threshold value is exceeded for the first time. Further, the plurality of rising sample points may or may not include a point 78 at which a saturation level is exceeded for the first time in the saturation waveform. In addition, the plurality of rising sample points can include one or more, among points at an intermediate portion at which a reception light value is more than the third threshold value and less than the saturation level in the rising portion of the saturation waveform (points 77a and 77b in Fig. 14 and points 77a, 77b, and 77c in Fig. 15). Further, the plurality of rising sample points may include all of the point 76 at the base of the rising, the points 77a, 77b, ..., at an intermediate portion, and the point 78 at which the saturation level is exceeded for the first time. The determination unit 121 specifies the plurality of rising sample points according to a predetermined rule.

For example, in the examples of Figs. 14 and 15, the point 76 and the two points 77a and 77b following the point 76 are combined to be the plurality of rising sample points. That is, in this example, the determination unit 121 specifies three rising sample points. Meanwhile, the determination unit 121 may specify only two rising sample points or may specify four or more rising sample points. Examples of the method of taking the plurality of rising sample points include the point 76 to the point 77a, the point 76 to the point 77b, the point 76 to the point 78, the point 77a to the point 77b, the point 77a to the point 78, and the last point (the point 77b in Fig. 14 and the point 77c in Fig. 15) at the intermediate portion to the point 78.

Next, the determination unit 121 calculates a slope of the rising portion by using the plurality of rising sample points (S25). The slope of the rising portion can be calculated, for example, by performing linear approximation or the like on the plurality of rising sample points. The determination unit 121 determines whether or not the calculated slope is larger than a predetermined slope (S26). In a case where the calculated slope is larger than the predetermined slope (Yes in S26), the determination unit 121 determines that the transmissive member 20 has an attached-matter (S18). Alternatively, the determination unit 121 determines that there is no target object 30 at a short distance from the distance measurement apparatus 10. On the other hand, in a case where the calculated slope is not larger than the predetermined slope (No in S26), the determination unit 121 determines that the target object 30 is at the short distance from the distance measurement apparatus 10 (S19). Alternatively, the determination unit 121 determines that there is no attached-matter at the transmissive member 20. The process for the pulsed-light emission is ended. The determination unit 121 performs these processes for each emission of pulsed-light.

The determination unit 121 may perform the determination by using the number of points (reception light value) from the point 76 at the base of the rising to the start point 78 of the saturation, instead of performing the processes of S24 to S26. In a case where the number of the points 76 to 78 is equal to or more than a predetermined number, the determination unit 121 determines that there is an attached-matter at the transmissive member 20 or the determination unit 121 does not have the target object 30 at a short distance from the distance measurement apparatus 10. On the other hand, in a case where the number of points from the point 76 at the base of the rising to the start point 78 of the saturation is not equal to or more than the predetermined number, the determination unit 121 determines that there is no attached-matter at the transmissive member 20 or the determination unit 121 determines that the target object 30 is at the short distance from the distance measurement apparatus 10. The start point of the saturation is as described above in the description related to S13 of the first embodiment.

In addition, the determination unit 121 may calculate a plurality of slopes by using the plurality of rising sample points, and perform at least one of a determination on whether or not an attached-matter exists at the transmissive member 20 and a determination on whether or not the target object 30 exists at a short distance from the distance measurement apparatus 10 based on the plurality of slopes. In this case, specifically, in a case where the plurality of rising sample points are three or more, the slope is calculated for each combination of two adjacent points. For example, a slope between the point 76 and the point 77a and a slope between the point 77a and the point 77b are respectively calculated. An average of a plurality of calculated slopes is calculated, and in a case where the average is equal to or more than a predetermined reference, the determination unit 121 determines that the transmissive member 20 has an attached-matter (S18). Alternatively, the determination unit 121 determines that there is no target object 30 at a short distance from the distance measurement apparatus 10. On the other hand, in a case where the calculated average is not larger than the predetermined slope (No in S26), the determination unit 121 determines that the target object 30 is at the short distance from the distance measurement apparatus 10 (S19). Alternatively, the determination unit 121 determines that there is no attached-matter at the transmissive member 20.

The determination unit 121 may use the determination method of the first embodiment and the determination method according to the present embodiment in combination. That is, in a case where the determinations are performed by both methods and it is determined that the target object 30 is at the short distance from the distance measurement apparatus 10 in at least one determination, it may be determined that the target object 30 exists at the short distance from the distance measurement apparatus 10, as the final determination.

As above, with the present embodiment, the same operations and effects as in the first embodiment can be obtained.

### (Third Embodiment)

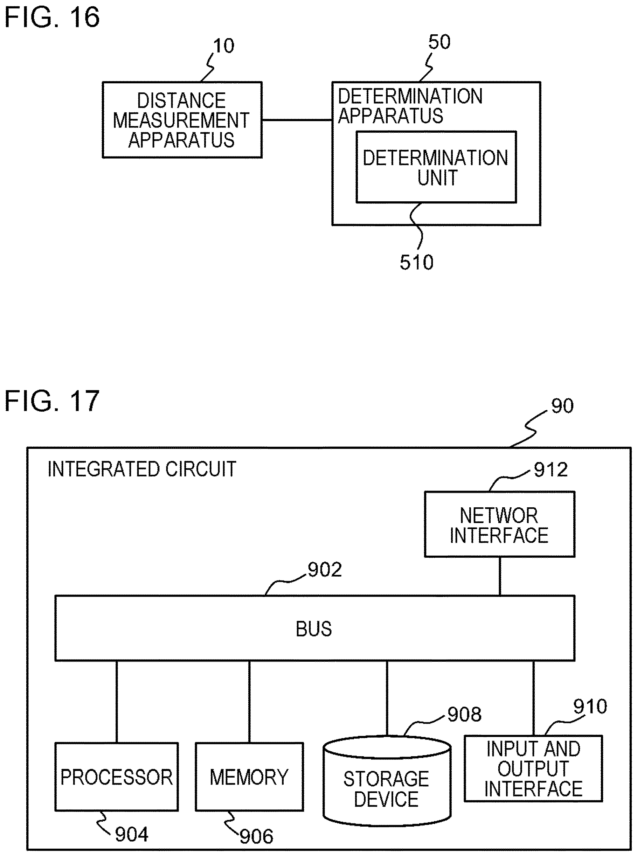

Fig. 16 is a block diagram illustrating a configuration of a determination apparatus 50 according to a third embodiment. The determination apparatus 50 according to the present embodiment includes a determination unit 510. The determination unit 510 performs at least one of a determination on whether or not an attached-matter exists at the transmissive member 20 and a determination on whether or not the target object 30 is at a short distance from the distance measurement apparatus 10, by using a saturation waveform. The saturation waveform is a reception pulsed-light waveform which is generated by the light receiving unit 180 of the distance measurement apparatus 10 and in which a reception light signal is partially saturated. The distance measurement apparatus 10 is an apparatus that emits pulsed-light emitted from the light source 14 through the transmissive member 20, and causes the light receiving unit 180 to detect the pulsed-light reflected by the target object 30. Details will be described below.

The distance measurement apparatus 10 according to the present embodiment has the same manner as the distance measurement apparatus 10 according to at least one of the first and second embodiments, except that the determination unit 121 is not included. The determination apparatus 50 according to the present embodiment acquires information necessary for a determination on a cause of saturation from the distance measurement apparatus 10 and makes the determination. The determination unit 510 performs the same process as the determination unit 121 according to at least one of the first and second embodiments.

For example, the determination apparatus 50 acquires information indicating a light reception result by the light receiving unit 180, from the distance measurement apparatus 10. The determination unit 510 performs a determination on the cause of the saturation, based on the information indicating the light reception result. The determination result may be output from the determination apparatus 50 to a display, a speaker, or the like. Here, the display or the speaker may be connected to the determination apparatus 50 or may be connected to the distance measurement apparatus 10. Further, the determination result may be held in a storage unit that is accessible from the determination apparatus 50. The storage unit may be a storage unit included in the determination apparatus 50 (for example, a storage device 908 to be described below) or a storage unit provided outside the determination apparatus 50.

Fig. 17 is a diagram illustrating a hardware configuration of the determination apparatus 50 according to the present embodiment. The determination apparatus 50 is implemented by using an integrated circuit 90. For example, the integrated circuit 90 is a system on chip (SoC), a personal computer (PC), a server machine, a tablet terminal, a smartphone, or the like.

The integrated circuit 90 includes a bus 902, a processor 904, a memory 906, the storage device 908, an input and output interface 910, and a network interface 912. The bus 902 is a data transmission path for the processor 904, the memory 906, the storage device 908, the input and output interface 910, and the network interface 912 to transmit and receive data to and from each other. Meanwhile, a method of mutually connecting the processor 904 and the like is not limited to bus connection. The processor 904 is an arithmetic processing device implemented by using a microprocessor or the like. The memory 906 is a memory implemented by using a random access memory (RAM) or the like. The storage device 908 is a storage device implemented by using a read only memory (ROM), a flash memory, or the like.

The input and output interface 910 is an interface for connecting the integrated circuit 90 to peripheral devices. The input and output interface 910 is connected to, for example, the distance measurement apparatus 10. Meanwhile, the distance measurement apparatus 10 may be connected to the integrated circuit 90 through a communication network.

The network interface 912 is an interface for connecting the integrated circuit 90 to a communication network. This communication network is, for example, a controller area network (CAN) communication network. A method of connecting the network interface 912 to the communication network may be a wireless connection or a wired connection.

The storage device 908 stores a program module for implementing the function of the determination unit 510. The processor 904 implements the function of the determination unit 510 by reading this program module into the memory 906 and executing the program module.

The hardware configuration of the integrated circuit 90 is not limited to the configuration illustrated in this diagram. For example, the program module may be stored in the memory 906. In this case, the integrated circuit 90 may not include the storage device 908.

With the present embodiment, the same operations and effects as in the first embodiment can be obtained.

As above, the embodiments and the examples are described with reference to the drawings, but these are examples of the present invention, and various other configurations other than the embodiment and the examples described above can be adopted.

The present application claims priority based on Japanese Patent Application No. 2021-205251 filed on December 17, 2021, the entire content of which is incorporated herein by reference.

### REFERENCE SIGNS LIST

10 distance measurement apparatus
14 light source
16 movable mirror
20 transmissive member
30 target object
50 determination apparatus
80 integrated circuit
90 integrated circuit
120 control unit
121 determination unit
140 light emitting unit
141 drive circuit
160 scanning range
163 drive circuit
164 movable reflection unit
180 light receiving unit
181 detection circuit
510 determination unit

## Claims

1. A distance measurement apparatus that emits pulsed-light emitted from a light source through a transmissive member and causes a light receiving unit to detect the pulsed-light reflected by a target object, the distance measurement apparatus comprising:
a determination unit that performs at least one of a determination on whether or not an attached-matter exists at the transmissive member and a determination on whether or not the target object is at a short distance from the distance measurement apparatus, by using a saturation waveform that is a reception pulsed-light waveform which is generated by the light receiving unit and in which a reception light signal is partially saturated.

2. The distance measurement apparatus according to claim 1,
wherein the saturation waveform is obtained from pulsed-light reception for a first time by the light receiving unit after the emission of the pulsed-light.

3. The distance measurement apparatus according to claim 1 or 2,
wherein the determination unit determines whether the attached-matter exists at the transmissive member or the target object exists at the short distance, by using the saturation waveform.

4. The distance measurement apparatus according to any one of claims 1 to 3,
wherein the determination unit
specifies a virtual peak position by using a plurality of data points including a start point of the saturation in the saturation waveform, and
performs at least one of the determination on whether or not the attached-matter exists at the transmissive member and the determination on whether or not the target object exists at the short distance from the distance measurement apparatus, by comparing the virtual peak position and a predetermined reference position.

5. The distance measurement apparatus according to claim 4,
wherein the reference position is a position determined based on a reception light peak of internal reflection light of the distance measurement apparatus in a state in which there is no attached-matter at the transmissive member and the target object does not exist at the short distance from the distance measurement apparatus.

6. The distance measurement apparatus according to claim 4 or 5,
wherein the determination unit specifies a peak position of a Gaussian curve or a secondary curve passing through the plurality of data points, as the virtual peak position.

7. The distance measurement apparatus according to any one of claims 1 to 6,
wherein the determination unit performs at least one of the determination on whether or not the attached-matter exists at the transmissive member and the determination on whether or not the target object exists at the short distance from the distance measurement apparatus, by using a slope of a rising portion of a pulse in the saturation waveform.

8. A determination apparatus comprising:
a determination unit that performs, by using a saturation waveform that is a reception pulsed-light waveform which is generated by a light receiving unit of a distance measurement apparatus that emits pulsed-light emitted from a light source through a transmissive member and causes the light receiving unit to detect the pulsed-light reflected by a target object and in which a reception light signal is partially saturated, at least one of a determination on whether or not an attached-matter exists at the transmissive member and a determination on whether or not the target object is at a short distance from the distance measurement apparatus.

9. A determination method executed by a computer, the determination method comprising:
performing, by using a saturation waveform that is a reception pulsed-light waveform which is generated by a light receiving unit of a distance measurement apparatus that emits pulsed-light emitted from a light source through a transmissive member and causes the light receiving unit to detect the pulsed-light reflected by a target object and in which a reception light signal is partially saturated, at least one of a determination on whether or not an attached-matter exists at the transmissive member and a determination on whether or not the target object is at a short distance from the distance measurement apparatus.

10. A program causing a computer to function as:
the determination apparatus according to claim 8.
